# FASCICULE DE BREVET EUROPEEN

(11) **EP 2 428 715 B1**
(45) Date de publication et mention de la délivrance du brevet: **02.12.2015**
(21) Numéro de dépôt: 11006198.3
(22) Date de dépôt: 27.07.2011
(51) Int. Cl.: B60R 16/02, H02G 3/00, F16L 3/12, F16L 3/13, F16L 3/237

(54) **Dispositif de fixation d'au moins un élément allongé sur un support**
Vorrichtung zur Befestigung mindestens eines länglichen Elements auf einem Träger
Device for attaching at least one elongate element on a mounting support

(30) Priorité: 09.09.2010 FR 1057151
(43) Date de publication de la demande: 14.03.2012
(73) Titulaire: A. RAYMOND et Cie, 38000 Grenoble (FR)
(72) Inventeur: Picavet, Christophe, 38130 Echirolles (FR)
(74) Mandataire: RACKETTE Patentanwälte PartG mbB

(56) Documents cités:
- EP-A1- 1 094 265
- DE-A1-102005 025 679
- DE-U1- 29 703 643
- FR-A1- 2 704 027

## Description

La présente invention concerne un dispositif de fixation d'au moins un élément allongé sur un support.

L'invention s'applique plus particulièrement, mais non exclusivement, à la fixation de câbles, formant éléments allongés, lesquels sont montés sur un support constitué par un bâti de moteur de véhicule automobile. Dans un tel véhicule, il est nécessaire de placer de nombreux câbles électriques sur le moteur. On conçoit donc qu'il est nécessaire de prévoir des dispositifs, permettant de fixer ces câbles de façon simple et fiable sur ce moteur.

On connaît déjà, par FR-A-2 588 621, une attache pour éléments allongés, qui comprend tout d'abord une embase en forme de U, délimitant un logement de réception de l'élément allongé. Un couvercle, formant berceau, est par ailleurs monté pivotant sur l'extrémité libre de l'une des ailes de cette embase.

Dans ces conditions, on place l'élément allongé dans le berceau, puis on exerce une action dirigée vers le fond de l'embase, de manière à faire basculer le berceau et à positionner l'élément allongé dans son logement de réception. Au terme de ce mouvement, des organes complémentaires de verrouillage, portés par le berceau et l'autre aile de l'embase, coopèrent de manière à bloquer l'attache en position.

Cette première solution connue présente cependant certains inconvénients, liés en particulier à son manque de compacité. En effet, du fait de la mise en oeuvre même de ce dispositif, il est nécessaire que le berceau fasse saillie de façon importante, au-dessus de l'embase. Ceci conduit donc à un encombrement significatif, ce qui est désavantageux lorsque ce dispositif doit être positionné dans des environnements tels qu'un moteur de véhicule automobile.

On a également proposé, par FR-A-2 599 809, un dispositif de fixation d'au moins un tube sur un support. Ce dispositif comprend tout d'abord un pied, pouvant être solidarisé sur le support, à partir duquel s'étendent deux ailes, définissant un logement ouvert à l'opposé du pied. Un verrou, monté via une charnière sur l'extrémité libre d'une des ailes, est propre à recevoir le tube à fixer.

Une fois ce tube placé dans le verrou, il s'agit de faire basculer ce dernier, de façon à admettre le tube dans son logement de réception. Ce verrou est par ailleurs équipé d'un cran, qui coopère avec un cran complémentaire prévu sur l'une des ailes, de façon à solidariser cette dernière avec le verrou, et ainsi à retenir le tube au sein d'un espace fermé, en vue de face.

Cette solution alternative s'accompagne cependant, elle aussi, d'inconvénients spécifiques. En effet la flexibilité des différents organes mécaniques de ce dispositif, ainsi que le mouvement angulaire important entre les deux positions du verrou, rendent incertaine la solidarisation de celui-ci sur les parois du logement. Par ailleurs cet art antérieur ne permet pas de répondre, de manière totalement satisfaisante, au problème d'encombrement lié à l'enseignement de FR-A-2 588 621.
Un dispositif de fixation conforme au préambule de la revendication 1 est divulgué par le document DE 10 2005 025679 A1.

Ceci étant précisé, l'invention vise à remédier aux différents inconvénients de l'art antérieur évoqués ci-dessus. Elle vise en particulier à proposer un dispositif qui est susceptible d'assurer une fixation fiable et durable d'un élément allongé sur un support. L'invention vise également à proposer un tel dispositif, qui autorise un montage particulièrement intuitif, pouvant donc s'accompagner d'une productivité élevée. Elle vise enfin à proposer un tel dispositif, qui présente une compacité satisfaisante.

A cet effet, l'invention a pour objet un dispositif de fixation selon la revendication 1.

L'idée à la base de l'invention est de conférer au dispositif de fixation une structure, qui le rend plus compact que dans les solutions de l'art antérieur. Ainsi, le fait de prévoir deux organes de maintien, pour chaque logement, permet de leur donner des dimensions nettement plus faibles que dans les dispositifs connus. En effet, ces derniers font appel à un unique bras de maintien, qui présente par conséquent un encombrement beaucoup plus important.

De plus, grâce à l'invention, la course des organes de maintien, entre leurs deux configurations fonctionnelles, est réduite par rapport à l'état de la technique. Ceci garantit un positionnement précis, en particulier dans la position de verrouillage. De plus, le fait d'autoriser des déplacements angulaires relativement limités permet de réduire les contraintes mécaniques, ce qui est avantageux en termes de durée de vie du dispositif.

Enfin, on notera que les organes de maintien sont susceptibles de se placer dans leur position verrouillée, sous le seul effet de l'insertion de l'élément allongé dans son logement. Par conséquent, ceci facilite la tâche des opérateurs, ce qui leur assure des cadences de montages élevées.

Un dispositif de fixation selon l'invention peut présenter avantageusement les caractéristiques additionnelles des revendications dépendantes, notamment :
- chaque patte comprend un tronçon aminci, permettant son articulation sur un montant respectif, ainsi qu'un tronçon massif, de plus grande épaisseur, destiné à exercer un effort de maintien sur l'élément allongé.
- il est prévu une nervure, au niveau de la jonction entre chaque patte et chaque bras, de façon à empêcher toute rotation mutuelle sensible.
- chaque montant est équipé d'un ergot, propre à mettre en tension une patte correspondante, dans sa position de maintien.
- chaque montant est équipé d'une languette flexible, propre à plaquer un élément allongé correspondant contre la patte en regard, dans la position de maintien.
- chaque patte est propre à passer de sa position de repos à sa position de maintien, moyennant un angle de rotation inférieur à 90°, notamment sensiblement égal à 45°.
- en vue de face, les deux pattes et, éventuellement, les deux bras et/ou les deux ergots et/ou les deux languettes sont symétriques par rapport à un axe médian du logement.

La présente invention sera mieux comprise et d'autres avantages apparaîtront à la lecture de la description détaillée d'un mode de réalisation pris à titre d'exemple nullement limitatif et illustré par les dessins annexés, dans lesquels :
La figure 1 est une vue en perspective, illustrant un dispositif de fixation d'un élément allongé sur un support, conforme à l'invention ;
Les figures 2 et 3 sont des vues de face, illustrant deux positions fonctionnelles de ce dispositif.

Les différentes figures illustrent un dispositif permettant la fixation, sur un support, d'éléments allongés. Dans l'exemple, ces derniers sont des tubes de section circulaire, en particulier des câbles électriques destinés à être montés sur un bâti non représenté, appartenant à un véhicule automobile. Bien entendu, l'invention trouve son application à des éléments allongés de nature et de forme différentes, ainsi qu'à d'autres types de support.

Le dispositif de fixation conforme à l'invention est avantageusement réalisé en une matière plastique appropriée, telle que par exemple le polyamide ou le polypropylène. Ce dispositif comprend tout d'abord un pied 10, destiné à être monté sur le support précité, qui est composé d'un fût 11 pourvu d'ailettes 12, lequel est propre à être encastré dans une ouverture ménagée dans le support. Par ailleurs, ce pied est prolongé par un voile 14, destiné à prendre appui contre la surface de ce support. La structure de ce pied, de type classique, ne sera pas détaillée davantage dans ce qui suit.

Le dispositif de l'invention comprend en outre deux logements 100, 200, dont chacun assure la réception d'un tube correspondant. On peut également prévoir que ce dispositif est pourvu, soit d'un unique logement, soit d'au moins trois logements placés les uns à côté des autres. Dans ce cas, le pied est de plus grande dimension, ou bien on peut prévoir plusieurs pieds.

Chaque logement 100 ou 200 est délimité par une base 102 ou 202, s'étendant à partir du pied 10, ainsi que par deux montants. On retrouve ainsi un montant central 104, commun aux deux logements, ainsi que deux montants latéraux 106 et 206. Chaque logement présente ainsi une forme globale de U, en vue de face comme illustré sur les figures.

On note tout d'abord A1 l'axe s'étendant d'arrière en avant du dispositif, qui est globalement parallèle à l'axe principal des tubes une fois montés dans les logements. On note également trois axes supplémentaires parallèles entre eux, verticaux sur les figures, à savoir A2 l'axe médian global du dispositif, ainsi que A100 et A200 les axes médians respectifs des deux logements 100 et 200.

L'extrémité libre, supérieure sur les figures, du montant central 104 est prolongée par deux pattes 110 et 210, s'étendant à l'opposé l'une de l'autre. De plus, l'extrémité libre des montants latéraux est prolongée par deux pattes supplémentaires 110' et 210', s'étendant en direction d'une patte respective 110 et 210.

Chaque patte possède tout d'abord un tronçon aminci 111, 111', 211, 211', formant une charnière permettant son articulation sur son montant, autour d'un axe parallèle à celui A1. Ce tronçon aminci est prolongé par un tronçon massif 112, 112', 212, 212', de plus grande épaisseur, terminée par une surface d'appui 113, 113', 213, 213'. Comme on le verra dans ce qui suit, cette dernière assure le maintien du tube dans son logement.

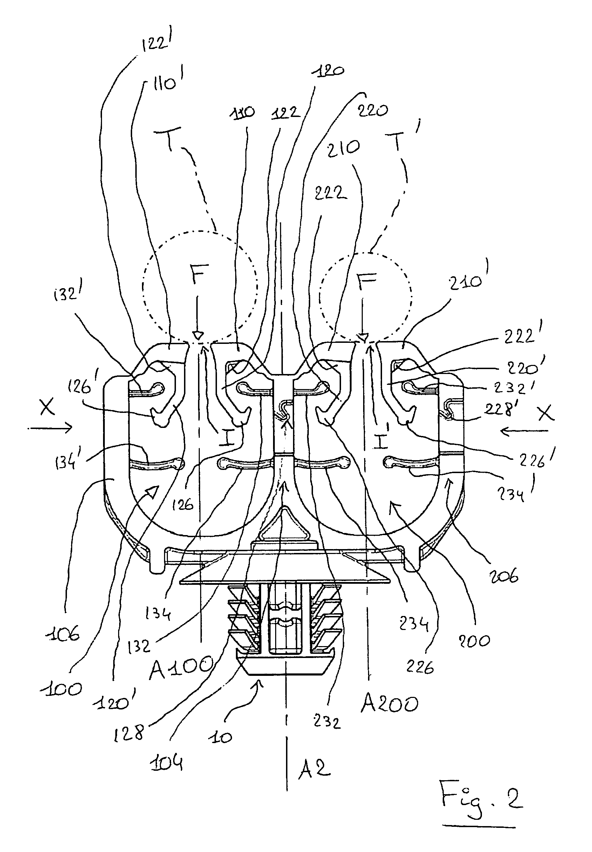

Un bras de verrouillage 120, 120', 220, 220' s'étend à partir d'une patte respective, en formant à peu près un angle droit. Les jonctions entre chaque patte et chaque bras sont renforcées par des nervures 122, 122', 222, 222', plus particulièrement visibles en figure 2. De la sorte, toute rotation intempestive entre les bras et les pattes est sensiblement évitée.

En vue de côté, à savoir selon les flèches X sur la figure 2, chaque bras s'étend sur seulement une partie de la largeur de la patte qui lui est associée. On distingue deux bras dits « avant » 120 et 220', ainsi que deux bras dits « arrière » 120' et 220.

Les deux bras 120 et 220, s'étendant à partir du montant central 104, sont disposés en quinconces afin d'éviter toute interférence mutuelle, lorsqu'ils sont dans leur position verrouillée. De plus, au sein d'un logement donné, les deux bras 120 et 120', ou bien 220 et 220', sont également disposés en quinconces, de sorte qu'ils présentent une symétrie centrale.

En regard de chaque bras 120, 120', 220, 220', le montant correspondant est creusé d'une encoche 124, 124', 224, 224'. Dans ces conditions, le montant central est pourvu de deux telles encoches 124 et 224, ménagées sur ses faces frontales respectivement avant et arrière. De plus, les deux autres encoches 124' et 224' sont prévues sur les faces frontales respectivement arrière et avant des deux montants latéraux 106 et 206.

Chaque bras 120, 120', 220, 220' est terminé par un doigt 126, 126', 226, 226', qui est propre à coopérer avec un doigt complémentaire placé sur le pourtour supérieur de chaque encoche. Sur les figures, seuls sont visibles les doigts 128 et 228', agencés sur la face avant des montants respectifs 104 et 206. Les différents couples de doigts, coopérant à la façon de crans, sont propres à assurer le verrouillage de chaque bras sur son montant, comme on le verra ci-après.

Au voisinage de la charnière d'articulation de la patte, chaque montant supporte un ergot 132, 132', 232, 232', faisant saillie dans sa position de repos en direction d'un bras correspondant 120, 120', 220, 220'. De plus, ces montants 104 et 106, ou 104 et 206, sont pourvus, à proximité de leur base 102 ou 202, de deux languettes flexibles 134, 134', 234, 234', s'étendant en direction l'une de l'autre. La fonction de ces ergots et de ces languettes apparaîtra plus clairement, à la lecture de ce qui suit.

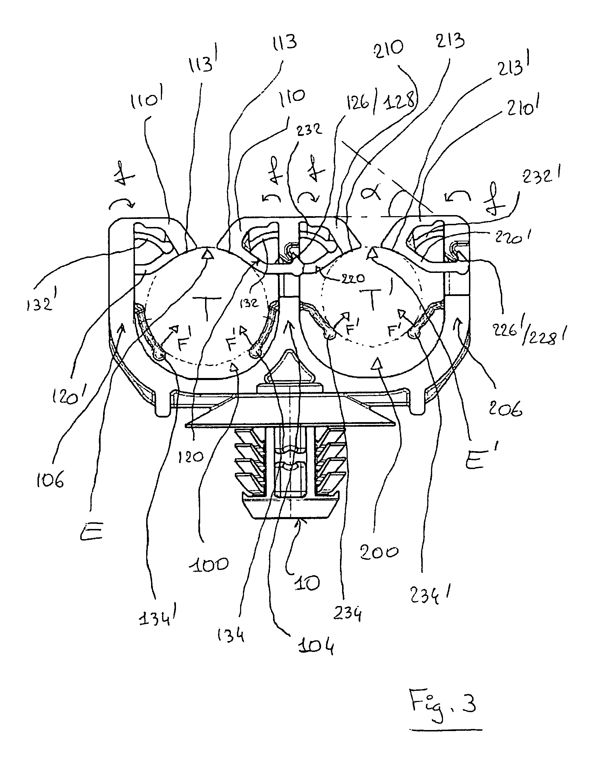

On notera que, en vue de face comme illustré sur les figures 2 et 3, chaque logement 100 ou 200 présente une symétrie axiale. En effet, les deux pattes 110 et 110', ou 210 et 210', les deux bras 120 et 120', ou 220 et 220', les deux ergots 132 et 132', ou 232 et 232' et les deux languettes 134 et 134', ou 234 et 234', sont mutuellement symétriques par rapport à l'axe médian A100 ou A200 d'un logement correspondant. Ceci est avantageux en termes de compacité, ainsi que de commodité de réalisation.

La mise en oeuvre du dispositif de fixation de l'invention, décrit ci-dessus, va maintenant être explicitée dans ce qui suit.

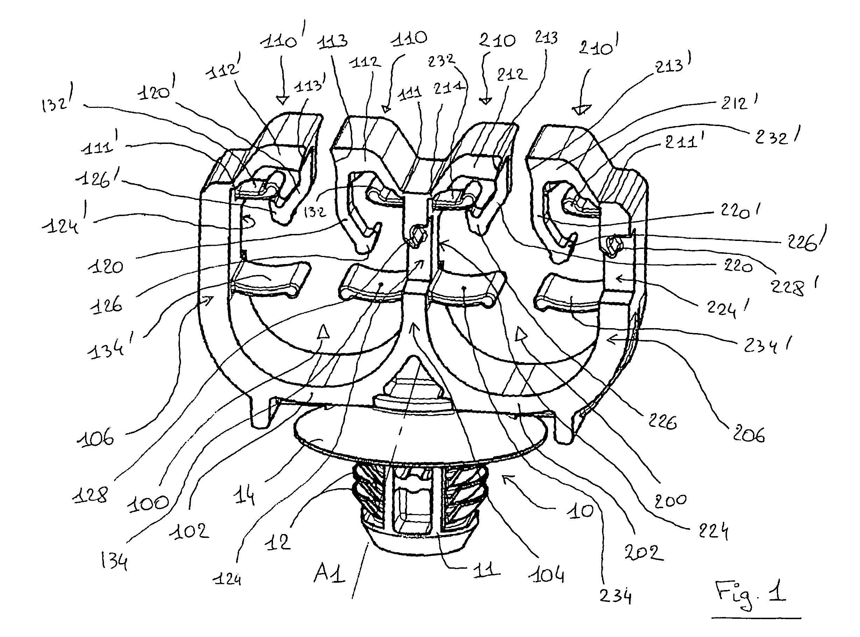

Dans la position de repos des figures 1 et 2, les pattes 110 et 110', ainsi que 210 et 210', sont placées au-dessus des montants 104 et 106, ainsi que 104 et 206. Elles s'étendent l'une en direction de l'autre, de façon à délimiter deux intervalles de passage l et l'. Ces derniers, qui présentent des largeurs bien inférieures à celles des logements 100 et 200, permettent un positionnement intuitif des tubes T ou T', lesquels viennent naturellement en appui contre les surfaces en regard des pattes (voir figure 2).

Puis le monteur exerce une force, notée F ou F' sur la figure 2, visant à repousser vers le bas chaque couple de pattes, afin d'introduire chaque tube T ou T' dans son logement respectif 100 ou 200. Ceci a pour conséquence de faire pivoter chaque patte autour de sa charnière, selon les flèches f à la figure 3. Au terme de ce mouvement, les crans des bras 120, 120', 220 et 220' coopèrent, par encliquetage élastique, avec les crans complémentaires dont sont pourvus les montants. Sur la figure 3 est illustré l'encliquetage mutuel des crans de la face avant, à savoir 126 et 128, ainsi que 226' et 228'.

Ceci permet de verrouiller les pattes dans leur position, dite de maintien, qui est illustrée sur cette figure 3. Dans cette configuration, chaque tube T ou T' prend appui contre la surface de maintien 113, 113', 213, 213', prévue à l'extrémité du tronçon massif 112, 112', 212, 212' de chaque patte 110, 110', 210, 210'.

L'épaisseur importante de cette surface 113, 113', 213, 213' est avantageuse, puisqu'elle confère une résistance significative à la patte de maintien 110, 110', 210, 210'. En effet, lors d'une tentative de démontage du tube, vers le haut sur la figure 3, la patte est sollicitée en compression. Or, la présence d'une surface de maintien massive garantit une augmentation de la tenue mécanique, en termes de flambage.

Lors de l'introduction du tube dans son logement, les différentes languettes flexibles 134, 134', 234, 234' sont déformées vers le bas. Dans la position finale de maintien, ces languettes exercent alors des forces F', dirigées vers le haut, qui ont tendance à plaquer chaque tube contre les surfaces de maintien des pattes en regard.

Ceci assure par conséquent une bonne stabilité à ces tubes, au sein de leur logement respectif 100 ou 200, puisqu'ils sont en quelque sorte pris en étau entre les languettes 134, 134', 234, 234' et les pattes 110, 110', 210, 210'. Par ailleurs, la présence de ces languettes permet une adaptation satisfaisante à des tubes T et T' de dimensions transversales différentes, comme cela est illustré sur la figure 3.

De plus, dans la position de maintien, les ergots 132, 132', 232, 232' prennent appui contre la surface en regard d'une patte correspondante, de façon à mettre cette dernière en tension. Ces ergots ont ainsi tendance à rappeler les pattes dans leur position initiale, ce qui permet tout d'abord de maintenir les crans, portés respectivement par les bras et les montants, en coopération permanente.

En outre, ceci évite une rotation trop importante des pattes 110, 110', 210, 210', qui aurait pour conséquence une augmentation intempestive de l'espace intercalaire E ou E', formé entre les pattes dans leur position de maintien de la figure 3. En effet on conçoit que, si la dimension de cet espace E ou E' est trop importante, il existe un risque significatif que le tube ressorte hors de son logement.

On notera que, de façon avantageuse, le passage entre les deux positions des pattes, correspondant respectivement aux figures 2 et 3, est opéré uniquement par l'introduction des tubes dans leur logement. En d'autres termes, il n'est pas nécessaire d'exercer une quelconque action supplémentaire, ce qui rend le montage particulièrement commode.

De plus, on note α l'angle de pivotement des pattes, entre ces deux positions. De façon avantageuse cet angle possède une valeur faible, de préférence inférieure à 90°, notamment sensiblement égale à 45°. Ceci garantit un encombrement réduit du dispositif, en particulier dans sa position de repos, ainsi que de faibles contraintes mécaniques en service.

L'invention n'est pas limitée à l'exemple décrit et représenté.

Ainsi, dans ce qui précède, chaque bras, ainsi que l'encoche portant le cran qui lui est associé, sont prévus latéralement par rapport à la patte, en vue de côté. Cependant, à titre de variante, on peut prévoir qu'ils sont positionnés de façon centrale en référence à ce bras. On peut également prévoir que le cran fixe n'est pas défini sur le pourtour d'une encoche.

## Revendications

1. Dispositif de fixation d'au moins un élément allongé (T, T'), notamment un câble, sur un support, notamment un bâti de moteur de véhicule automobile, ce dispositif comprenant un pied (10) de solidarisation au support, ainsi qu'au moins un logement (100, 200) de réception du ou de chaque élément allongé, bordé par une base (102, 202) et deux montants (104, 106, 206), chaque montant supportant une patte (110, 110', 210, 210') de maintien de l'élément allongé, articulée sur ce montant, chaque patte étant mobile entre une position de repos, dans laquelle elle est tournée en direction de l'autre patte, de façon à former un intervalle de passage (I, l') de l'élément allongé, dont les dimensions transversales sont inférieures à celles du logement de réception (100, 200), et une position de maintien, dans laquelle chaque patte (110, 110', 210, 210') est basculée en direction de la base (102, 202), de façon à maintenir l'élément allongé dans son logement, **caractérisé en ce que** chaque patte (110, 110', 210, 210') est propre à passer de sa position de repos à sa position de maintien, uniquement sous l'action de l'élément allongé (T, T') lequel repousse la patte lors de son insertion dans le logement de réception (100, 200), ce dispositif comprenant en outre des moyens (120, 120', 220, 220') de verrouillage de chaque patte, dans sa position de maintien, lesdits moyens de verrouillage de chaque patte (110, 110', 210, 210') comprenant un bras (120, 120', 220, 220') prolongeant cette patte, chaque bras étant propre à être solidarisé par encliquetage sur un montant correspondant (104, 106, 206), les bras (120, 120', 220, 220') étant disposés en quinconces, de sorte qu'ils présentent une symétrie centrale, chaque bras (120, 120', 220, 220') étant terminé par un cran (126, 126', 226, 226'), propre à coopérer avec un cran complémentaire (128, 228'), prévu sur le montant (104, 106, 206).

2. Dispositif de fixation selon la revendication 1, dans lequel chaque patte (110, 110', 210, 210') comprend un tronçon aminci (111, 111', 211, 211'), permettant son articulation sur un montant respectif, ainsi qu'un tronçon massif (112, 112', 212, 212'), de plus grande épaisseur, destiné à exercer un effort de maintien sur l'élément allongé.

3. Dispositif de fixation selon la revendication précédente, dans lequel il est prévu une nervure (122, 122', 222, 222'), au niveau de la jonction entre chaque patte (110, 110', 210, 210') et chaque bras (120, 120', 220, 220'), de façon à empêcher toute rotation mutuelle sensible entre ce bras et cette patte.

4. Dispositif de fixation selon l'une quelconque des revendications précédentes, dans lequel chaque bras (120, 120', 220, 220') s'étend sur seulement une partie de la largeur de la patte (110, 110', 210, 210') qui lui est associée de manière à ce que l'on distingue, pour chaque logement (100, 200) un bras dit « avant » (120, 220'), ainsi qu'un bras dit « arrière » (120', 220).

5. Dispositif de fixation selon l'une quelconque des revendications précédentes, dans lequel chaque montant (104, 106, 206) est équipé d'un ergot (132, 132', 232, 232'), propre à mettre en tension une patte correspondante (110, 110', 210, 210'), dans sa position de maintien.

6. Dispositif de fixation selon la revendication précédente, dans lequel, dans la position de maintien de la patte, l'ergot (132, 132', 232, 232') prend appui contre la surface en regard d'une patte (110, 110', 210, 210') correspondante, de façon à la mettre en tension et la rappeler dans sa position initiale pour maintenir les crans (126, 126', 226, 226') et cran complémentaire (128, 228'), en coopération permanente.

7. Dispositif de fixation selon l'une quelconque des revendications précédentes, dans lequel chaque montant est équipé d'une languette flexible (134, 134', 234, 234'), propre à plaquer un élément allongé (T, T') correspondant contre la patte en regard (110, 110', 210, 210'), dans la position de maintien.

8. Dispositif de fixation selon l'une quelconque des revendications précédentes, dans lequel, dans sa position repos, chaque patte (110, 110', 210, 210') est placée au-dessus du montant (104, 106, 206) correspondant.

9. Dispositif de fixation selon l'une quelconque des revendications précédentes, dans lequel chaque patte (110, 110', 210, 210') est propre à passer de sa position de repos à sa position de maintien, moyennant un angle de rotation (α) inférieur à 90°, notamment sensiblement égal à 45°.

10. Dispositif de fixation selon l'une quelconque des revendications précédentes, dans lequel, en vue de face, les deux pattes (110, 110', 210, 210') et, éventuellement, les deux bras (120, 120', 220, 220') et/ou les deux ergots (132, 132', 232, 232') et/ou les deux languettes (134, 134', 234, 234') sont symétriques par rapport à un axe médian (A100, A200) du logement (100, 200).

## Patentansprüche

1. Vorrichtung zur Befestigung wenigstens eines länglichen Elements (T, T'), insbesondere eines Kabels, an einem Träger, insbesondere an einem Motorgehäuse eines Kraftfahrzeugs, wobei die Vorrichtung einen Fuß (10) für die Verbindung mit dem Träger sowie wenigstens ein Gehäuse (100, 200) zur Aufnahme des oder jedes länglichen Elements aufweist, das durch eine Basis (102, 202) und zwei Stützen (104, 106, 206) begrenzt ist, wobei jede Stütze eine Lasche (110, 110', 210, 210') zum Halten des länglichen Elements trägt, die gelenkig auf der Stütze angebracht ist, wobei jede Lasche zwischen einer Ruhestellung, in der sie in Richtung der anderen Lasche gedreht ist, um einen Durchgangsspalt (I, I') für das länglichen Elements zu bilden, dessen Querschnitt kleiner als der des Gehäuses zur Aufnahme (100, 200) ist, und einer Haltestellung bewegbar ist, in der jede Lasche (110, 110', 210, 210') in Richtung der Basis (102, 202) gekippt ist, um das längliche Element in dem Gehäuse zu halten, **dadurch gekennzeichnet, dass** jede Lasche (110, 110', 210, 210') dazu eingerichtet ist, von der Ruhestellung in die Haltestellung nur unter der Einwirkung des länglichen Elements (T, T') überzugehen, das die Lasche während des Eintretens in das Gehäuse zur Aufnahme (100, 200) zurückdrückt, wobei die Vorrichtung weiterhin Mittel (120, 120', 220, 220') zum Verriegeln jeder Lasche in der Haltestellung aufweist, wobei die Mittel zum Verriegeln jeder Lasche (110, 110', 210, 210') einen Arm (120, 120', 220, 220') aufweisen, der die betreffende Lasche verlängert, wobei jeder Arm dazu eingerichtet ist, durch Einrasten mit einer zugehörigen Stütze (104, 106, 206) verbindbar zu sein, wobei die Arme (120, 120', 220, 220') versetzt angeordnet sind, so dass sie eine Punktsymmetrie bilden, wobei jeder Arm (120, 120', 220, 220') durch eine Nut (126, 126', 226, 226') abgeschlossen ist, die dazu eingerichtet ist, mit einer passenden an der Stütze (104, 106, 206) ausgebildeten Nut (128, 228') in Eingriff zu kommen.

2. Vorrichtung zur Befestigung nach Anspruch 1, bei der jede Lasche (110, 110', 210, 210') einen dünneren Abschnitt (111, 111', 211, 211'), der das Schwenken auf einer zugehörigen Stütze ermöglicht, sowie einen massiven, dickeren Abschnitt (112, 112', 212, 212') aufweist, der dazu vorgesehen ist, eine Haltekraft auf das längliche Element auszuüben.

3. Vorrichtung zur Befestigung nach dem vorangehenden Anspruch, bei der auf der Höhe des Übergangs zwischen jeder Lasche (110, 110', 210, 210') und jedem Arm (120, 120', 220, 220') eine Rippe (122, 122', 222, 222') vorgesehen ist, um eine merkliche gegenseitige Drehung zwischen dem Arm und der Lasche zu verhindern.

4. Vorrichtung zur Befestigung nach einem der vorangehenden Ansprüche, bei der sich jeder Arm (120, 120', 220, 220') nur über einen Teil der Länge der Lasche (110, 110', 210, 210') erstreckt, die mit ihm so verbunden ist, dass man bei jedem Gehäuse (100, 200) einen sogenannten "vorderen" Arm (120, 220') sowie einen sogenannten "hinteren" Arm (120', 220) unterscheidet.

5. Vorrichtung zur Befestigung nach einem der vorangehenden Ansprüche, bei der jede Stütze (104, 106, 206) mit einem Zapfen (132, 132', 232, 232') ausgestattet ist, der dazu eingerichtet ist, in der Haltestellung eine zugehörige Lasche (110, 110', 210, 210') unter Spannung zu setzen.

6. Vorrichtung zur Befestigung nach dem vorangehenden Anspruch, bei der in der Haltestellung der Lasche der Zapfen (132, 132', 232, 232') an einer einer zugehörigen Lasche (110, 110', 210, 210') gegenüberliegenden Oberfläche anliegt, um diese unter Spannung zu setzen und sie in die Ausgangsposition zurückzusetzen, um die Nuten (126, 126', 226, 226') und die passende Nut (128, 228') in ständigem Eingriff zu halten.

7. Vorrichtung zur Befestigung nach einem der vorangehenden Ansprüche, bei der jede Stütze mit einer flexiblen Zunge (134, 134', 234, 234') ausgestattet ist, die dazu eingerichtet ist, in der Haltestellung ein zugehöriges längliches Element (T, T') gegen die gegenüberliegende Lasche (110, 110', 210, 210') zu drücken.

8. Vorrichtung zur Befestigung nach einem der vorangehenden Ansprüche, bei der jede Lasche (110, 110', 210, 210') in der Ruhestellung oberhalb der zugehörigen Stütze (104, 106, 206) angeordnet ist.

9. Vorrichtung zur Befestigung nach einem der vorangehenden Ansprüche, bei der jede Lasche (110, 110', 210, 210') dazu eingerichtet ist, mit einem durchschnittlichen Drehwinkel (α) von weniger als 90°, insbesondere im Wesentlichen gleich 45°, von der Ruhestellung in die Haltestellung überzugehen.

10. Vorrichtung zur Befestigung nach einem der vorangehenden Ansprüche, bei der in einer Vorderansicht die zwei Laschen (110, 110', 210, 210') und gegebenenfalls die zwei Arme (120, 120', 220, 220') und/oder die zwei Zapfen (132, 132', 232, 232') und/oder die zwei Zungen (134, 134', 234, 234') in Bezug auf eine Mittelachse (A100, A200) des Gehäuses (100, 200) symmetrisch sind.

## Claims

1. Device for fixing at least one elongate member (T, T'), in particular a cable, to a support, in particular a motor vehicle engine mount, this device comprising a foot (10) for securing it to the support and at least one housing (100, 200) for receiving the or each elongate member bounded by a base (102, 202) and two uprights (104, 106, 206), each upright supporting a lug (110, 110', 210, 210') for holding the elongate member articulated on this upright, each lug being movable between a rest position facing toward the other lug so as to form a gap (l, l') for the passage of the elongate member, the transverse dimensions of which are smaller than those of the receiving housing (100, 200), and a holding position, wherein each lug (110, 110', 210, 210') is tilted toward the base (102, 202) so as to hold the elongate member in its housing, **characterised in that** each lug (110, 110', 210, 210') is adapted to move from its rest position to its holding position only when acted on by the elongate member (T, T'), which pushes back the lug upon insertion thereof into the receiving housing (100, 200), this device further comprising means (120, 120', 220, 220') for locking each lug in its holding position, said means for locking each lug (110, 110', 210, 210') comprising an arm (120, 120', 220, 220') extending said lug, each arm being adapted to be attached by clipping it onto a corresponding upright (104, 106, 206), the arms (120, 120', 220, 220') being disposed in quincunxes so that they have central symmetry, each arm (120, 120', 220, 220') being terminated by a detent (126, 126', 226, 226') adapted to cooperate with a complementary detent (128, 228') on the upright (104, 106, 206).

2. Fixing device according to claim 1, wherein each lug (110, 110', 210, 210') comprises a thinner portion (111, 111', 211, 211') allowing its articulation on a respective upright and a solid portion (112, 112', 212, 212') of greater thickness intended to exert a holding force on the elongate member.

3. Fixing device according to the preceding claim, wherein a rib (122, 122', 222, 222') is provided at the junction between each lug (110, 110', 210, 210') and each arm (120, 120', 220, 220') so as to prevent significant mutual rotation between this arm and this lug.

4. Fixing device according to any one of the preceding claims, wherein each arm (120, 120', 220, 220') extends only part of the width of the associated lug (110, 110', 210, 210') so that for each housing (100, 200) it is possible to distinguish a "front" arm (120, 120') and a "rear" arm (120', 220).

5. Fixing device according to any one of the preceding claims, wherein each upright (104, 106, 206) includes a stud (132, 132', 232, 232') capable of tensioning a corresponding lug (110, 110', 210, 210') in its holding position.

6. Fixing device according to the preceding claim, wherein, in the position holding the lug, the stud (132, 132', 232, 232') bears against the facing surface of a corresponding lug (110, 110', 210, 210') to tension it and to urge it toward its initial position to hold the detents (126, 126', 226, 226') and the complementary detent (128, 128') in permanent co-operation.

7. Fixing device according to any one of the preceding claims, wherein each upright is equipped with a flexible tongue (134, 134', 234, 234') adapted to press a corresponding elongate member (T, T') against the facing lug (110, 110', 210, 210') in the holding position.

8. Fixing device according to any one of the preceding claims, wherein, in its reset position, each lug (110, 110', 210, 210') is located above the corresponding upright (104, 106, 206).

9. Fixing device according to any one of the preceding claims, wherein each lug (110, 110', 210, 210') is adapted to move from its rest position to its holding position through an angle (α) of rotation less than 90°, in particular substantially equal to 45°.

10. Fixing device according to any one of the preceding claims, wherein, in front view, the two lugs (110, 110', 210, 210') and, optionally, the two arms (120, 120', 220, 220') and/or the two studs (132, 132', 232, 232') and/or the two tongues (134, 134', 234, 234') are symmetrical relative to a median axis (A100, A200) of the housing (100, 200).
